# EUROPÄISCHE PATENTANMELDUNG

(11) **EP 3 324 015 A1**
(43) Veröffentlichungstag der Anmeldung: **23.05.2018**
(21) Anmeldenummer: 17001693.5
(22) Anmeldetag: 13.10.2017
(51) Int. Cl.: F01N 3/20, F01N 3/30, F01N 9/00

(54) **REDUKTIONSMITTELDOSIERSYSTEM MIT LEITUNGSBEHEIZUNG**

(30) Priorität: 21.11.2016 DE 102016013816
(71) Anmelder: Albonair GmbH, 44263 Dortmund (DE)
(72) Erfinder: Hüthwohl, Georg, 44229 Dortmund (DE)
(74) Vertreter: Patentanwaltskanzlei Methling

(57) **Zusammenfassung**

Die Erfindung betrifft ein Reduktionsmitteldosiersystem (10) zur Einspritzung eines Reduktionsmittels in den Abgasstrom eines Verbrennungsmotors zur selektiven katalytischen Reduktion, mit zumindest einer Förderpumpe (20), mittels derer Reduktionsmittel aus einem Reduktionsmitteltank (40) über zumindest eine Saugleitung (45) angesaugt, über zumindest eine Druckleitung (50) gefördert und über zumindest eine Düse (60) in den Abgasstrom des Verbrennungsmotors eingeleitet wird, wobei das Dosiersystem (10) eine Druckluftversorgung (30) umfasst und das Reduktionsmittel mittels Druckluft außerhalb der Düse (60) zerstäubt wird, wobei das Reduktionsmitteldosiersystem (10) zumindest ein Heizelement (70) umfasst und zumindest ein Abschnitt der Reduktionsmittel fördernden Druckleitung (50) durch das Heizelement (70) geführt ist, um das in der Druckleitung (50) zu der Düse (60) geförderte Reduktionsmittel zu erwärmen. Ferner betrifft die Erfindung ein Verfahren zum Betrieb eines Reduktionsmitteldosiersystems.

## Beschreibung

Die Erfindung betrifft ein Reduktionsmitteldosiersystem zur Einspritzung eines Reduktionsmittels in den Abgasstrom eines Verbrennungsmotors zur selektiven katalytischen Reduktion, mit zumindest einer Dosierpumpe, mittels derer Reduktionsmittel aus einem Reduktionsmitteltank über zumindest eine Saugleitung angesaugt, über zumindest eine Dosierleitung gefördert und über zumindest eine Düse in den Abgasstrom des Verbrennungsmotors eingeleitet wird, wobei das Dosiersystem eine Druckluftversorgung umfasst und das Reduktionsmittel mittels Druckluft außerhalb der Düse zerstäubt wird.

Weiter betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion, wobei mittels zumindest einer Dosierpumpe über zumindest eine Saugleitung aus einem Reduktionsmitteltank Reduktionsmittel angesaugt und über zumindest eine Dosierleitung zu zumindest einer Düse gefördert wird und ein Einleiten des Reduktionsmittels über die zumindest eine Düse in den Abgasstrom des Verbrennungsmotors erfolgt, wobei das Reduktionsmittel mittels Druckluft, die von einer Druckluftversorgung bereitgestellt wird, außerhalb der Düse zerstäubt wird.

Derartige Reduktionsmitteldosiersysteme sind beispielsweise bekannt aus DE 10 2008 013 960 A1, DE 10 2009 016 810 A1 und DE 10 2009 040 111 A1.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil insbesondere gemäß DIN 70070 eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Bei den bekannten Reduktionsmitteldosiersystemen zur Einspritzung eines Reduktionsmittels in den Abgasstrom eines Verbrennungsmotors zur selektiven katalytischen Reduktion können sich die relativ niedrigen Temperaturen der Abgase bei einem Kaltstart des Verbrennungsmotors, d.h. bevor die Betriebstemperatur des Verbrennungsmotors erreicht ist, ungünstig auf die Funktionsweise eines SCR-Katalysators auswirken.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt. Die Aufbereitung unterteilt sich somit in die folgenden beiden Reaktionsschritte:

Thermolyse (NH₂)₂CO → NH₃ + HNCO

Hydrolyse HNCO + H₂O → NH₃ + CO₂

In der ersten Reaktion, der Thermolyse, wird durch den Einfluss der Temperatur Hamstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Relative niedrige Temperaturen, wie sie beispielsweise beim Kaltstart des Verbrennungsmotors vorliegen, können den Ablauf dieser Reaktionen verlangsamen.

Die EP 2 673 484 B1 offenbart einen Abgassammler, welcher mit einer Brennkraftmaschine verbindbar ist, zum Aufnehmen von Abgasen von der Kraftmaschine, wobei der Abgassammler eine Sammlerkammer, wenigstens einen Abgaseinlass, wenigstens einen Abgasauslass und einen Reduktionsmittelkanal umfasst, wobei wenigstens ein Abschnitt des Reduktionsmittelkanals innerhalb der Sammlerkammer angeordnet ist, um das Reduktionsmittel zu erwärmen, bevor das Reduktionsmittel mit den Abgasen gemischt wird. Des Weiteren ist vorgesehen, dass Druckluftleitungsabschnitte in der Sammlerkammer beheizt werden. Durch das Erwärmen des Reduktionsmittels und/oder der Druckluft soll das Mischen des Reduktionsmittels mit den Abgasen verbessert werden. Nachteilig ist hier jedoch, dass die Sammlerkammer die Temperatur der Abgase hat und somit erst effektiv arbeitet, wenn die Betriebstemperatur des Verbrennungsmotors erreicht ist. Bei einem Kaltstart des Verbrennungsmotors trägt die Temperatur in der Sammlerkammer zunächst noch nicht zu der Erwärmung des Reduktionsmittels und/oder der Druckluft bei. Systembdingt ist hierbei lediglich eine Erwärmung des Reduktionsmittels auf ein Temperaturniveau unterhalb der momentanen Abgastemperatur möglich.

Die Aufgabe der Erfindung ist es daher, ein Reduktionsmitteldosiersystem der eingangs genannten Art derart weiterzubilden, dass die Funktionsweise eines SCR-Katalysators insbesondere bei einem Kaltstart eines Verbrennungsmotors, d.h. bevor die Betriebstemperatur des Verbrennungsmotors erreicht ist, unterstützt wird.

Diese Aufgabe wird erfindungsgemäß durch ein Reduktionsmitteldosiersystem gemäß Anspruch 1 und ein Verfahren zum Betrieb eines Reduktionsmitteldosiersystems gemäß Anspruch 9 gelöst. Vorteilhafte Weiterbildungen der Erfindung sind in den abhängigen Ansprüchen angegeben.

Besonders vorteilhaft bei einem Reduktionsmitteldosiersystem zur Einspritzung eines Reduktionsmittels in den Abgasstrom eines Verbrennungsmotors zur selektiven katalytischen Reduktion, mit zumindest einer Förderpumpe, mittels derer Reduktionsmittel aus einem Reduktionsmitteltank über zumindest eine Saugleitung angesaugt, über zumindest eine Druckleitung gefördert und über zumindest eine Düse in den Abgasstrom des Verbrennungsmotors eingeleitet wird, wobei das Dosiersystem eine Druckluftversorgung umfasst und das Reduktionsmittel mittels Druckluft außerhalb der Düse zerstäubt wird, ist es, dass das Reduktionsmitteldosiersystem zumindest ein Heizelement umfasst und zumindest ein Abschnitt der Reduktionsmittel fördernden Druckleitung durch das Heizelement geführt ist, um das in der Druckleitung zu der Düse geförderte Reduktionsmittel zu erwärmen.

Dadurch, dass das Reduktionsmitteldosiersystem zumindest ein Heizelement umfasst und zumindest ein Abschnitt der Reduktionsmittel fördernden Druckleitung durch das Heizelement geführt ist, kann die Sprayqualität bei der Einspritzung des Reduktionsmittels, insbesondere bei der Hamstoffeindosierung, verbessert werden. Das Führen der Reduktionsmittel fördernden Druckleitung durch das Heizelement ermöglicht ein Erwärmen des in der Druckleitung zu der Düse geförderten Reduktionsmittels insbesondere auf Temperaturen zwischen 80° Celsius und 500° Celsius. Hierdurch wird die Aerosolbildung und die Sprayqualität des Reduktionsmittels verbessert und insbesondere die Tröpfchengröße des Reduktionsmittels beim Einspritzen in den Abgasstrom des Verbrennungsmotors in etwa halbiert. Mit deutlich kleineren Tröpfchen des Reduktionsmittels kann die Katalysatorwirkung eines SCR-Katalysators bei relativ niedrigen Abgastemperaturen, insbesondere unterhalb von etwa 200° Celsius, wie sie beispielsweise beim Kaltstart eines Verbrennungsmotors vorherrschen, deutlich verbessert werden, da das eingespritzte Reduktionsmittel aufgrund der kleineren Tröpfchen schneller verdampft.

Durch die Anordnung eines Heizelementes zur Erwärmung des in der Reduktionsmittel fördernden Druckleitung zu der Düse geförderten Reduktionsmittels ist somit eine Erwärmung des Reduktionsmittels auf ein Temperaturniveau oberhalb der momentanen Abgastemperatur möglich. Dies wird ermöglicht durch das Heizelement, über das Wärmeenergie von außen zugeführt wird. Ferner kann eine Regelung der Heizleistung vorgesehen sein. Hierdurch ist eine Erwärmung des Reduktionsmittels auf ein gewünschtes und/oder vorgebbares Temperaturniveau möglich. Bei dem Heizelement kann es sich insbesondere um einen Wärmetauscher mit elektrischer Beheizung handeln.

Mit dem Begriff des Heizelementes ist dabei im erfindungsgemäßen Sinne gemeint, dass eine Einrichtung vorgesehenen ist, mittels derer zumindest ein Abschnitt der Reduktionsmittel fördernden Druckleitung beheizbar ist, d.h. mittels dessen dem Abschnitt der Reduktionsmittel fördernden Druckleitung zusätzliche Heizenergie von außen zuführbar ist, ohne dass es sich um Abwärme des Abgases handelt. Vorzugsweise erfolgt dies durch die Anordnung von elektrisch betätigten Heizelementen. Alternativ oder kumulativ kann jedoch auch beispielsweise eine brennstoffbetriebene Brennkammer angeordnet sein Mit dem Begriff des Heizelementes ist dabei keine Beschränkung auf eine blockförmige Ausgestaltung verbunden.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Die vielfach eingesetzte Reduktionsmittellösung gemäß DIN 70070 gefriert aufgrund ihres Wassergehaltes bei ca. -11° C. Daher ist es vorteilhaft, eine Beheizungseinrichtung beispielsweise innerhalb des Dosiersystems zur Beheizung der Reduktionsmittellösung für den Fall sehr niedriger Umgebungstemperaturen vorzusehen. Eine solche Beheizungseinrichtung kann kumulativ zu dem Heizelement angeordnet sein, insbesondere innerhalb des Tanks.

Als Förderpumpen können beispielsweise Inline-Pumpen eingesetzt werden. Bei der Inline-Pumpe handelt es sich um eine Sonderform der Kolbenpumpe in Form einer Doppelkolbenpumpe, bei der zwei Kolben in einer Hülse betrieben werden. Der mittels einer Spule magnetisch angetriebene Druckkolben fördert das durch den Saugstutzen in die Pumpe eingetretene Reduktionsmittel in einer Vorwärtsbewegung mittels Gegendruck eines Steuerkolbens über den Druckstutzen zur Düse. Eine solche Pumpe, bei welcher der Kolben mittels einer Spule magnetisch angetrieben wird, wird auch als Magnetkolbenpumpe bezeichnet. Jede Förderpumpe kann als Pumpeneinheit aufgebaut sein und zusätzlich weitere Bauteile, insbesondere Schaltventile und/oder Sensoren als integrale Bestandteile aufweisen.

Vorzugsweise weist das Dosiersystem zumindest einen Reduktionsmittelfilter auf. Hierdurch ist es gewährleistet, die Reduktionsmittellösung in der gewünschten Qualität und Reinheit bereitzustellen, um Verstopfungen von Leitungen oder der Düse vorzubeugen.

Kern der Erfindung ist somit ein Reduktionsmitteldosiersystem zur Einspritzung eines Reduktionsmittels in den Abgasstrom eines Verbrennungsmotors zur selektiven katalytischen Reduktion mit Beheizung zumindest eines Abschnittes der Reduktionsmittel fördernden Druckleitung und somit zur Erwärmung des in der Druckleitung zu der Düse geförderten Reduktionsmittels auf eine insbesondere festlegbare Temperatur.

Das Dosiersystem entsprechend der bevorzugten Ausführungsformen ist auf allen Gebieten anwendbar, auf denen ein System zum Dosieren eines Fluids für einen Verbrennungsprozess, insbesondere bei Dieselmotoren, benötigt wird.

Die hier beschriebene Anwendung in SCR-Dosiersystemen ist ein Beispiel dafür.

In einer bevorzugten Ausführungsform weist die Druckluftversorgung eine erste Druckluftleitung zur Aerosolbildung auf und zumindest ein Abschnitt der ersten Druckluftleitung ist durch ein Heizelement geführt, um die in der ersten Druckluftleitung zu der Düse geförderte Druckluft zu erwärmen. Dabei kann es sich um dasjenige Heizelement handeln, welches der Erwärmung zumindest eines Abschnittes der Reduktionsmittel fördernden Druckleitung dient. Alternativ oder kumulativ kann zumindest ein weiteres Heizelement angeordnet sein, durch welches zumindest ein Abschnitt der ersten Druckluftleitung geführt wird, um die in der ersten Druckluftleitung zu der Düse geförderte Druckluft zu erwärmen.

Das Führen der ersten Druckluftleitung durch das Heizelement ermöglicht ein Erwärmen der in der ersten Druckluftleitung zu der Düse geförderten Druckluft insbesondere auf Temperaturen zwischen 80° Celsius und 500° Celsius. Das Erwärmen der Druckluft zur Aerosolbildung begünstigt das Verdampfen des Wassers in dem Reduktionsmittel. Somit unterstützt das Erwärmen der Druckluft zur Aerosolbildung die Verbesserung der Sprayqualität und die Verringerung der Tröpfchengröße des Reduktionsmittels des erwärmten Reduktionsmittels beim Einspritzen In den Abgasstrom des Verbrennungsmotors. Daher trägt das Erwärmen der Druckluft zur Aerosolbildung zur Verbesserung der Katalysatorwirkung eines SCR-Katalysators bei relativ niedrigen Abgastemperaturen bei, insbesondere unterhalb von etwa 200° Celsius, wie sie beispielsweise beim Kaltstart eines Verbrennungsmotors vorherrschen.

In einer weiteren bevorzugten Ausführungsform weist die Druckluftversorgung eine zweite Druckluftleitung zur Reinigung Reduktionsmittel führender Leitungen und Elemente auf. Diese zweite Druckluftleitung der Druckluftversorgung mündet somit in die Reduktionsmittel fördernde Druckleitung und ist über ein Ventil mit Druckluft beaufschlagbar. Durch Öffnung des Ventils und Beaufschlagung der zweiten Druckluftleitung der Druckluftversorgung mit Druckluft wird die Reduktionsmittel fördernde Druckleitung sowie die Düse nach Beendigung der Dosierung von Reduktionsmittel befreit, um Verstopfungen vorzubeugen.

Vorzugsweise ist ein Ventil, insbesondere ein Dreiwegeventil zwischen der Druckluftversorgung, der ersten Druckluftleitung zur Aerosolbildung und der zweiten Druckluftleitung zur Reinigung vorgesehen. Nach Abschalten des Dosiersystems wird Druckluft über das Ventil in die zweite Druckluftleitung geleitet, um das sich in der zumindest einen Druckleitung befindliche Reduktionsmittel auszublasen. Das Ventil verhindert in diesem Fall den Eintritt des Reduktionsmittels in die Druckluftleitung. Das Ventil kann vorzugsweise als ein Magnetventil und/oder ein Rückschlagventil ausgeführt sein. Durch Schaltung eines solchen Magnetventils und/oder Beaufschlagung eines mit einem Rückschlagventil ausgestalteten Druckluftanschlusses des Dosiersystems kann das Dosiersystem inklusive der Reduktionsmittel führenden Leitungen und der Düse nach Beendigung der Dosierung mittels Druckluft gespült werden, um Ablagerungen und Verstopfungen beispielsweise durch ein Einfrieren oder Auskristallisieren der Reduktionsmittellösung vorzubeugen. Hierdurch kann Frostschäden und Verstopfungen effektiv vorgebeugt werden.

Des Weiteren kann vorzugsweise ein gesteuertes Ventil zur Regelung der Druckluftversorgung des Dosiersystems vorgesehen sein. Ein solches Regelventil dient der Steuerung, d.h. der Ein- und Abschaltung der Druckluftversorgung für das gesamte oder einen Teil des Dosiersystems. Das Regelventil kann dabei im Rahmen einer Steuerung angesteuert werden. Es besteht auch die Möglichkeit, dieses Ventil zur Regelung der Druckluft im Rahmen eines offenen oder geschlossenen Regelkreises zu regeln. Durch eine gepulste, d.h. getaktete Ansteuerung eines Ventils kann ferner der Druck auf ein gewünschtes Niveau eingeregelt werden.

Mit dem Terminus der Regelung der Druckluft ist dabei insbesondere umfasst, die Dauer der Druckluftzufuhr und/oder die Taktung einer gepulsten Druckluftzufuhr und/oder den Massenstrom der Druckluftzufuhr und/oder den Druck der Druckluft zu steuern oder zu regeln. Ein Regeln kann insbesondere in einem offenen oder geschlossenen Regelkreis insbesondere in Abhängigkeit von ermittelten, insbesondere permanent gemessenen und/oder in Abständen wiederholt ermittelten Messwerten erfolgen.

Die von dem Dosiersystem benötigte Druckluft kann mittels eines Kompressors, insbesondere mittels eines geregelten Kompressors, bereitgestellt werden. Alternativ oder kumulativ kann die Druckluft von einer fahrzeugseitig bereitgestellten Druckluftversorgung in das Dosiersystem gespeist werden. Durch die Anordnung eines Schaltventils und/oder eines Druckregelventils und/oder eines insbesondere geregelten Kompressors kann der benötigte Druckluftmassenstrom sowie der benötigte Luftdruck eingeregelt und bereitgestellt werden. Vorzugsweise wird die Druckluft über einen Luftfilter geleitet. Hierdurch kann die gewünschte Reinheit und Partikelfreiheit der Druckluft gewährleistet werden.

In einer weiteren bevorzugten Ausführungsform ist das Heizelement ein Metallblock, insbesondere ein Aluminiumblock. Durch Verwenden eines Metalls und insbesondere von Aluminium und somit eines Materials mit einer relativ hohen Wärmeleitfähigkeit für den Heizblock, wird eine effektive Wärmeübertragung von dem Heizelement auf die Reduktionsmittel fördernde zweite Druckleitung und/oder die erste Druckluftleitung zur Aerosolbildung gewährleistet.

In einer weiteren bevorzugten Ausführungsform weist der Heizblock eine Mehrzahl an Heizelementen auf. Insbesondere weist der Heizblock vier Heizelemente auf. Durch das Verwenden von vier Heizelementen kann der Heizblock gleichmäßig aufgeheizt werden, insbesondere, wenn die Heizelemente symmetrisch angeordnet sind. Die Heizelemente sind vorzugsweise elektrische Widerstandsheizelemente. Jedes Heizelement weist vorzugsweise eine Leistung von 250 W oder 500 W auf. Experimente haben gezeigt, dass mit dieser bevorzugten Anordnung optimale Ergebnisse erzielt werden können. Bevorzugt kommen regelbare Heizelemente zum Einsatz. Hierdurch kann die Heizleistung der Heizelemente geregelt, insbesondere in einem offenen oder geschlossenen Regelkreis geregelt werden, insbesondere in Abhängigkeit von ermittelten, insbesondere permanent gemessenen und/oder in Abständen wiederholt ermittelten Messwerten.

In einer weiteren bevorzugten Ausführungsform werden die Reduktionsmittel fördernde zweite Druckleitung und/oder die erste Druckluftleitung zur Aerosolbildung auf Temperaturen zwischen 80° C und 500° C erhitzt. Experimente haben gezeigt, dass bei einer Erhitzung der Leitungen in diesem Temperaturbereich das Reduktionsmittel und/oder die Druckluft so erwärmt werden kann, dass die Tröpfchengröße bei der Aerosolbildung in etwa halbiert werden kann und dadurch die Sprayqualität wesentlich verbessert wird. Durch die deutlich kleineren Tröpfchen des Reduktionsmittels, das in den Abgasstrom eindosiert wird, kann die Katalysatorwirkung eines SCR-Katalysators bei relativ niedrigen Temperaturen der Abgase, wie beispielsweise unter 200° C, entscheidend verbessert werden.

In einer weiteren bevorzugten Ausführungsform ist das Heizelement stromauf vor der Düse, insbesondere unmittelbar stromauf vor der Düse angeordnet. Durch diese Anordnung des Heizelementes und das dadurch bedingte Erwärmen des Reduktionsmittels kann die chemische Umsetzung des Reduktionsmittels bereits beginnen, bevor das Reduktionsmittel die Düse erreicht. Im Fall des vorzugsweise verwendeten Harnstoffs in wässriger Lösung kann zumindest die Thermolyse, bei der durch den Einfluss der Temperatur Harnstoff in Ammoniak (NH₃) und Isocyansäure (HNCO) umgewandelt wird, bereits vor der Düse erfolgen oder zumindest begonnen werden. Dies trägt zur Verringerung der Tröpfchengröße des Reduktionsmittels beim Einspritzen in den Abgasstrom und somit zu einer Verbesserung der Sprayqualität und der Katalysatorwirkung eines SCR-Katalysators bei relativ niedrigen Temperaturen der Abgase, wie beispielsweise unter 200° C, bei.

In einer weiteren bevorzugten Ausführungsform ist die zumindest eine Düse eine außenmischende Einspritzdüse, insbesondere eine außenmischende Zweistoffdüse. Vorzugsweise tritt dabei aus zumindest einem Auslass der Druckleitung Reduktionsmittel und aus zumindest einem Auslass der ersten Druckluftleitung zur Aerosolbildung Druckluft aus. Ein Auslass der ersten Druckluftleitung ist zur Aerosolbildung vorzugsweise derart positioniert, dass mittels der aus dem Auslass der ersten Druckluftleitung austretenden Druckluft das aus dem Auslass der Druckleitung austretende Reduktionsmittel zerstäubt wird. Insbesondere kann der Auslass der ersten Druckluftleitung unter einem Winkel gegenüber der Strahlrichtung des Auslasses der Druckleitung angestellt sein. Durch die strömungsoptimierte Anordnung der Auslässe der Druckleitung und der ersten Druckluftleitung wird die Aerosolbildung außerhalb der Düse unmittelbar im Abgasstrang des Verbrennungsmotors verbessert. Mithilfe eines Regelventils kann die Druckluft auf ein zur Zerstäubung des Reduktionsmittels mittels Druckluft gewünschtes Druckniveau geregelt werden.

Dadurch, dass die Zerstäubung des Reduktionsmittels außerhalb der Düse mittels der Druckluft erfolgen kann, kann auf die Anordnung einer Mischkammer verzichtet werden, wie dies bei vielen aus dem Stand der Technik bekannten Reduktionsmitteldosiersystemen zur Einspritzung eines Reduktionsmittels in den Abgasstrom eines Verbrennungsmotors zur selektiven katalytischen Reduktion bekannt ist Durch den möglichen Verzicht auf eine derartige Mischkammer wird der benötigte Einbauraum für das erfindungsgemäße Reduktionsmitteldosiersystem deutlich verkleinert und damit weiter optimiert.

Besonders vorteilhaft bei dem Verfahren zum Betrieb eines Reduktionsmitteldosiersystems zur Einspritzung eines Reduktionsmittels in den Abgasstrom eines Verbrennungsmotors zur selektiven katalytischen Reduktion, wobei mittels zumindest einer Förderpumpe über zumindest eine Saugleitung aus einem Reduktionsmitteltank Reduktionsmittel angesaugt und über zumindest eine Druckleitung zu zumindest einer Düse gefördert wird und ein Einleiten des Reduktionsmittels über die zumindest eine Düse in den Abgasstrom des Verbrennungsmotors erfolgt, und wobei das Reduktionsmittel mittels Druckluft, die von einer Druckluftversorgung bereitgestellt wird, außerhalb der Düse zerstäubt wird, ist es, dass mittels zumindest eines Heizelementes, durch das zumindest ein Abschnitt der Reduktionsmittel fördernden Druckleitung geführt ist, das in der Druckleitung zu der Düse geförderte Reduktionsmittel erwärmt wird.

In einer bevorzugten Ausführungsform wird eine erste Druckluftleitung der Druckluftversorgung zur Aerosolbildung durch ein Heizelement geführt und die in der ersten Druckluftleitung zu der Düse geförderte Druckluft erwärmt.

Dabei kann es sich um dasjenige Heizelement handeln, welches der Erwärmung zumindest eines Abschnittes der Reduktionsmittel fördernden Druckleitung dient. Alternativ oder kumulativ kann zumindest ein weiteres Heizelement angeordnet sein, durch welches zumindest ein Abschnitt der ersten Druckluftleitung geführt wird, um die in der ersten Druckluftleitung zu der Düse geförderte Druckluft zu erwärmen.

In einer weiteren bevorzugten Ausführungsform wird die Tröpfchengröße des in den Abgasstrom eingeleiteten Reduktionsmittels durch das Erwärmen der Druckleitung und/oder der ersten Druckluftleitung verringert, und insbesondere erfolgt eine Halbierung der Tröpfchengröße des in den Abgasstrom eingeleiteten Reduktionsmittels durch das Erwärmen der Druckleitung und/oder der ersten Druckluftleitung mittels des Heizelementes.

In einer weiteren bevorzugten Ausführungsform erfolgt mittels eines Steuergerätes eine Regelung zumindest der Förderpumpe und des Heizelementes in einem offenen oder geschlossenen Regelkreis insbesondere in Abhängigkeit von ermittelten Messwerten, insbesondere in Abhängigkeit der Abgastemperatur und/oder des Abgasmassenstromes und/oder der Stickoxidkonzentration (NOₓ-Konzentration) in dem Abgas stromab der Reduktionsmitteleinspritzung.

Vorzugsweise kann das Dosiersystem ein integriertes Steuergerät, beispielsweise einen CanBus-Anschluss, aufweisen. Durch die Integration eines Steuergerätes in das Dosiersystem kann die für die Steuerung und den Betrieb des Dosiersystems benötigte Elektronik integriert werden. Ein CanBus-Anschluss ermöglicht auf einfache Weise eine Einbindung des Dosiersystems in ein Steuersystem eines Kraftfahrzeuges und somit eine Einbindung in die Onbord-Diagnose des Kraftfahrzeugs.

Des Weiteren kann auch die Druckluftversorgung ein integriertes Steuergerät, beispielsweise einen CanBus-Anschluss, aufweisen. Dadurch wird eine Einbindung der Druckluftversorgung in ein Steuersystem eines Kraftfahrzeuges und somit eine Einbindung in die Onbord-Diagnose des Kraftfahrzeugs möglich.

In einer weiteren bevorzugten Ausführungsform ist stromab der Düse in dem Abgasstrom des Verbrennungsmotors zumindest ein Stickoxidsensor (NOₓ-Sensor) angeordnet und es erfolgt eine Überwachung der NOₓ-Konzentration, insbesondere erfolgt eine Regelung des Heizelementes in Abhängigkeit von der gemessenen NOₓ-Konzentration.

Vorzugsweise kann ein Stickoxidsensor (NOₓ-Sensor) zur Messung der NOₓ-Konzentration im Abgasstrang stromab der Reduktionsmitteleinspritzung vorgesehen sein. Mittels eines derartigen NOₓ-Sensors im Abgasstrang stromab der Reduktionsmitteleinspritzung kann die Qualität der selektiven katalytischen Reduktion überwacht werden. Des Weiteren kann der Messwert dieses NOₓ-Sensors zur Ansteuerung und/oder Regelung des Dosiersystems, zur Regelung des zeitlichen Verlaufs der Dosiermenge und insbesondere zur Regelung des Heizelementes in Abhängigkeit der gemessenen NOₓ-Konzentration verwendet werden.

Vorzugsweise wird der Druck stromab der Förderpumpe mittels eines Drucksensors erfasst und überwacht. Durch eine derartige Erfassung und Überwachung des Druckes in der Reduktionsmittel führenden Druckleitung zur Düse können die korrekte Arbeitsweise der Förderpumpe und die Dosierung kontinuierlich überwacht werden. Des Weiteren ist es möglich, einen oder mehrere Temperatursensoren zur Erfassung der Reduktionsmitteltemperatur insbesondere stromauf und stromab des Heizelementes und/oder einen Durchflusssensor in das Dosiersystem zu integrieren.

Vorzugsweise kann das Dosiersystem insbesondere Sensoren für die Messung der Abgastemperatur und/oder des Abgasmassenstromes stromab der Reduktionsmitteleinspritzung aufweisen.

Vorzugsweise kann das Dosiersystem weiterhin einen Qualitätssensor zur Überwachung der Reduktionsmittellösung aufweisen. Mittels eines derartigen Qualitätssensors kann überwacht werden, dass tatsächlich Reduktionsmittellösung in dem Tank befindlich ist und mittels des Dosiersystems gefördert wird, und nicht etwa pures Wasser oder dergleichen. Ein solcher Qualitätssensor kann darauf basieren, dass der elektrische Widerstand der geförderten Flüssigkeit gemessen wird. Alternativ oder kumulativ kann eine Messung der Schallgeschwindigkeit innerhalb der geförderten Flüssigkeit erfolgen. Ein solcher Qualitätssensor kann insbesondere in dem Tank, in welchem die Reduktionsmittellösung bevorratet wird, und/oder in einer Reduktionsmittel fördernden Leitung angeordnet sein.

Mit Hilfe von zumindest einem der zuvor erwähnten Sensoren im Abgasstrang stromab der Reduktionsmitteleinspritzung kann ein geschlossener Regelkreis zur Regelung des gesamten Dosiersystems realisiert werden. Somit kann eine sensororientierte Regelungsstrategie mit einem geschlossenen Regelkreis bereitgestellt werden.

In einer weiteren bevorzugten Ausführungsform umfasst das Verfahren zur Einspritzung eines Reduktionsmittels in den Abgasstrom eines Verbrennungsmotors zur selektiven katalytischen Reduktion die Schritte:
- Bereitstellen eines erfindungsgemäßen Reduktionsmitteldosiersystems;
- Ansaugen eines Reduktionsmittels mittels einer Förderpumpe über eine Saugleitung aus einem Reduktionsmitteltank;
- Fördern des Reduktionsmittels über eine Druckleitung zu zumindest einer Düse;
- Einleiten des Reduktionsmittels über die zumindest eine Düse in den Abgasstrom des Verbrennungsmotors; und
- Zerstäuben des Reduktionsmittels mittels Druckluft, die von einer Druckluftversorgung bereitgestellt wird, außerhalb der Düse.

Besonders vorteilhaft ist es, dass das Verfahren weiterhin die folgenden Schritte umfasst:
- Integrieren zumindest eines Heizelementes in das Reduktionsmittelsystem;
- Führen zumindest eines Abschnittes der Reduktionsmittel fördernden Druckleitung durch das Heizelement; und
- Erhitzen und zumindest teilweise Erwärmen des in der Druckleitung zu der Düse geförderten Reduktionsmittels.

In einer weiteren bevorzugten Ausführungsform umfasst das Verfahren ferner die Schritte:
- Bereitstellen einer ersten Druckluftleitung zur Aerosolbildung und einer zweiten Druckluftleitung zur Reinigung Reduktionsmittel führender Leitungen und Elemente in der Druckluftversorgung;
- Führen zumindest der ersten Druckluftleitung durch ein oder das Heizelement; und
- Erhitzen und zumindest teilweise Erwärmen der in der ersten Druckluftleitung zu der Düse geförderten Druckluft.

In einer weiteren bevorzugten Ausführungsform umfasst das Verfahren den Schritt:
- Verringern der Tröpfchengröße des Reduktionsmittels durch das Erhitzen und zumindest teilweise Erwärmen der Druckleitung und/oder der ersten Druckluftleitung.

In einer weiteren bevorzugten Ausführungsform umfasst das Verfahren den Schritt:
- insbesondere Halbieren der Tröpfchengröße des in den Abgasstrom eingeleiteten Reduktionsmittels durch das Erhitzen insbesondere auf eine Temperatur zwischen 80°C und 500°C und zumindest teilweise Erwärmen der Druckleitung und/oder der ersten Druckluftleitung.

Ein Ausführungsbeispiel der Erfindung ist in der Figur dargestellt und wird nachfolgend näher erläutert. Es zeigt:

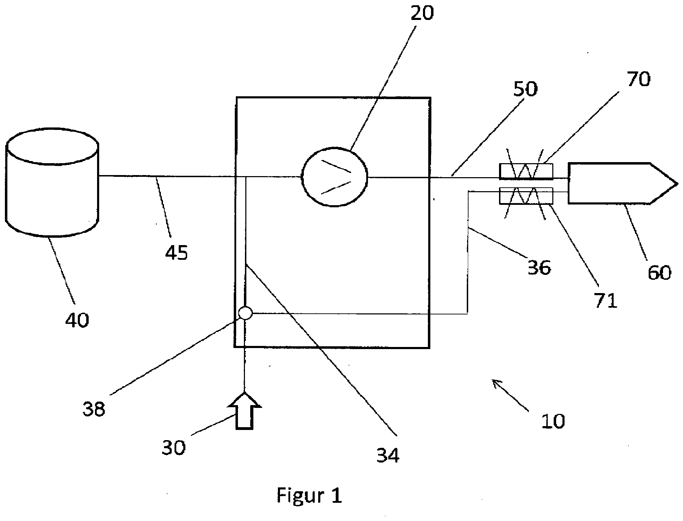

- Figur 1: eine schematische Darstellung eines Reduktionsmitteldosiersystems.

Figur 1 zeigt eine schematische Darstellung eines Reduktionsmitteldosiersystems 10 zur Einspritzung eines Reduktionsmittels in den Abgasstrom eines nicht dargestellten Verbrennungsmotors zur selektiven katalytischen Reduktion. Mittels einer Förderpumpe 20 wird über eine Saugleitung 45 ein Reduktionsmittel aus einem Reduktionsmitteltank 40 angesaugt und über eine Druckleitung 50 zu einer Einspritzdüse 60 gefördert. Ober die Einspritzdüse 60 wird das Reduktionsmittel in den Abgasstrom des Verbrennungsmotors eingeleitet.

Ferner umfasst das Dosiersystem 10 eine Druckluftversorgung 30, die eine erste Druckluftleitung 36 zur Aerosolbildung und eine zweite Druckluftleitung 34 zur Reinigung Reduktionsmittel führender Leitungen und Elemente aufweist. Die erste Druckluftleitung 36 ist direkt mit der Düse 60 verbunden. Die zweite Druckluftleitung 34 ist mit der Saugleitung 45 stromauf der Förderpumpe 20 verbunden. Die Druckluftversorgung 30 liefert Druckluft, die zum einen über die erste Druckluftleitung 36 zur Aerosolbildung bzw. zur Zerstäubung des Reduktionsmittels außerhalb der Düse 60 und zum anderen zur Reinigung Reduktionsmittel führender Leitungen und Elemente nach Beendigung der Dosierung bereitgestellt wird. Die Darstellung der Verbindungsleitungen ist rein schematisch.

Ein Dreiwegeventil 38 ist zwischen der Druckluftversorgung 30, der ersten Druckluftleitung 36 und der zweiten Druckluftleitung 34 vorgesehen. Während des Betriebs des Dosiersystems 10 wird Druckluft über das Ventil 38 in die erste Druckluftleitung 36 geleitet, sodass Druckluft zur Aerosolbildung bzw. zur Zerstäubung des Reduktionsmittels außerhalb der Düse 60 bereitgestellt wird. Nach Abschalten des Dosiersystems 10 wird Druckluft über das Ventil 38 in die zweite Druckluftleitung 34 geleitet, um das sich in der Druckleitung 50 befindliche Reduktionsmittel auszublasen. Das Ventil 38 verhindert in diesem Fall den Eintritt des Reduktionsmittels in die erste Druckluftleitung 36. Das Ventil kann vorzugsweise als ein Magnetventil und/oder ein Rückschlagventil ausgeführt sein.

Bei der Düse 60 handelt es sich um eine außenmischende Zweistoffdüse. Die Aerosolbildung erfolgt dabei dadurch, dass über zumindest eine erste Düsenöffnung einer solchen Zweistoffdüse das über die Druckleitung 50 zugeführte Reduktionsmittel in den Abgastrakt eingespritzt wird. Über eine oder mehrere zweite Düsenöffnungen in einer solchen Düse wird die über die Druckluftleitung 36 zugeführte Druckluft ebenfalls in den Abgastrakt eingeleitet, sodass das Reduktionsmittel außerhalb der Düse mittels Druckluft zerstäubt wird Hierzu sind die zweiten Düsenöffnungen entsprechend angestellt und auf den Strahl des aus der Düse austretenden Reduktionsmittels gerichtet. Durch die Aerosolbildung außerhalb der Düsen 60 kann somit auf die Anordnung einer Mischkammer verzichtet werden.

Ferner umfasst das Dosiersystem 10 ein erstes Heizelement 70. Das Heizelement 70 ist stromauf vor der Düse 60 angeordnet und dient der Beheizung eines Abschnittes der Reduktionsmittel fördernden Druckleitung 50. Hierdurch wird mittels des ersten Helzelementes 70 das in der Druckleitung 50 zu der Düse 60 geförderte Reduktionsmittel erwärmt.

Ferner umfasst das Dosiersystem 10 ein zweites Heizelement 71. Das zweite Heizelement 71 ist stromauf vor der Düse 60 angeordnet und dient der Beheizung eines Abschnittes der Druckluft fördernden Druckluftleitung 36. Hierdurch wird mittels des zweiten Heizelementes 71 die in der Druckluftleitung 36 zu der Düse 60 geförderte Druckluft erwärmt.

Die Heizelemente 70, 71 weisen elektrische Widerstandsheizelemente auf. Alternativ können andere geeignete Heizelemente verwendet werden. Als besonders vorteilhaft hat sich eine Leistung von 500 W für jedes Heizelement erwiesen.

Ein Abschnitt der Druckleitung 50 wird durch das Heizelement 70 geführt, um das in der Reduktionsmittel fördernden Druckleitung 50 zu der Düse 60 geförderte Reduktionsmittel zu erwärmen. Des Weiteren ist zusätzlich ein Abschnitt der Druckluftleitung 36 durch das Heizelement 71 geführt, um die in der Druckluftleitung 36 zu der Düse 60 geförderte Druckluft zu erwärmen.

Mit Hilfe des/der Heizelementes/Heizelemente 70, 71 können die Reduktionsmittel fördernde Druckleitung 50 und die Druckluftleitung 36 zur Aerosolbildung auf Temperaturen zwischen 80° C und 500° C erhitzt werden

Es versteht sich, dass mehr als eine Förderpumpe 20, mehr als eine Saugleitung 45, mehr als eine Druckleitung 50, mehr als eine Düse 60 und mehr als ein Heizelement 70 in dem Reduktionsmitteldosiersystem 10 verwendet werden können.

## Patentansprüche

1. Reduktionsmitteldosiersystem (10) zur Einspritzung eines Reduktionsmittels in den Abgasstrom eines Verbrennungsmotors zur selektiven katalytischen Reduktion, mit zumindest einer Förderpumpe (20), mittels derer Reduktionsmittel aus einem Reduktionsmitteltank (40) über zumindest eine Saugleitung (45) angesaugt, über zumindest eine Druckleitung (50) gefördert und über zumindest eine Düse (60) in den Abgasstrom des Verbrennungsmotors eingeleitet wird, wobei das Dosiersystem (10) eine Druckluftversorgung (30) umfasst und das Reduktionsmittel mittels Druckluft außerhalb der Düse (60) zerstäubt wird, **dadurch gekennzeichnet, dass** das Reduktionsmitteldosiersystem (10) zumindest ein Heizelement (70) umfasst und zumindest ein Abschnitt der Reduktionsmittel fördernden Druckleitung (50) durch das Heizelement (70) geführt ist, um das in der Druckleitung (50) zu der Düse (60) geförderte Reduktionsmittel zu erwärmen.

2. Dosiersystem (10) nach Anspruch 1, **dadurch gekennzeichnet, dass** die Druckluftversorgung (30) eine erste Druckluftleitung (36) zur Aerosolbildung aufweist und zumindest ein Abschnitt der ersten Druckluftleitung (36) durch ein Heizelement (71) geführt Ist, um die in der ersten Druckluftleitung (36) zu der Düse (60) geförderte Druckluft zu erwärmen.

3. Dosiersystem (10) nach Anspruch 1 oder 2, **dadurch gekennzeichnet, dass** die Druckluftversorgung (30) eine zweite Druckluftleitung (34) zur Reinigung Reduktionsmittel führender Leitungen und Elemente aufweist.

4. Dosiersystem (10) nach einem der vorherigen Ansprüche, **dadurch gekennzeichnet, dass** das Heizelement (70, 71) ein Heizblock ist, insbesondere ein Metallblock, insbesondere ein Aluminiumblock ist.

5. Dosiersystem (10) nach einem der vorherigen Ansprüche, **dadurch gekennzeichnet, dass** das Heizelement (70, 71) ein Heizblock ist, wobei der Heizblock eine Mehrzahl an elektrisch beheizten Heizelementen aufweist.

6. Dosiersystem (10) nach einem der vorherigen Ansprüche, **dadurch gekennzeichnet, dass** mit Hilfe des Heizelementes (70, 71) die Reduktionsmittel fördernde Druckleitung (50) und/oder die erste Druckluftleitung (36) zur Aerosolbildung auf Temperaturen zwischen 80° C und 500° C erhitzt werden.

7. Dosiersystem (10) nach einem der vorherigen Ansprüche, **dadurch gekennzeichnet, dass** das Heizelement (70, 71) insbesondere unmittelbar stromauf vor der Düse (60) angeordnet ist

8. Dosiersystem (10) nach einem der vorherigen Ansprüche, **dadurch gekennzeichnet, dass** die zumindest eine Düse (60) eine außenmischende Einspritzdüse ist.

9. Verfahren zum Betrieb eines Reduktionsmitteldosiersystems (10) nach einem der vorhergehenden Ansprüche zur Einspritzung eines Reduktionsmittels in den Abgasstrom eines Verbrennungsmotors zur selektiven katalytischen Reduktion, wobei mittels zumindest einer Förderpumpe (20) über zumindest eine Saugleitung (45) aus einem Reduktionsmitteltank (40) Reduktionsmittel angesaugt und über zumindest eine Druckleitung (50) zu zumindest einer Düse (60) gefördert wird und ein Einleiten des Reduktionsmittels über die zumindest eine Düse (60) in den Abgasstrom des Verbrennungsmotors erfolgt, wobei das Reduktionsmittel mittels Druckluft, die von einer Druckluftversorgung (30) bereitgestellt wird, außerhalb der Düse (60) zerstäubt wird,
**dadurch gekennzeichnet, dass** mittels zumindest eines Heizelementes (70), durch den zumindest ein Abschnitt der Reduktionsmittel fördernden Druckleitung (50) geführt ist, das in der Druckleitung (50) zu der Düse (60) geförderte Reduktionsmittel erwärmt wird.

10. Verfahren nach Anspruch 9, **dadurch gekennzeichnet, dass** eine erste Druckluftleitung (36) der Druckluftversorgung zur Aerosolbildung durch ein Heizelement (71) geführt wird und die in der ersten Druckluftleitung (36) zu der Düse (60) geförderte Druckluft erwärmt wird.

11. Verfahren nach Anspruch 9 oder 10, **dadurch gekennzeichnet, dass** die Tröpfchengröße des in den Abgasstrom eingeleiteten Reduktionsmittels durch das Erwärmen der Druckleitung (50) und/oder der ersten Druckluftleitung (36) verringert wird, insbesondere, dass eine Halbierung der Tröpfchengröße des Reduktionsmittels durch das Erwärmen der Druckleitung (50) und/oder der ersten Druckluftleitung (36) mittels des Heizelementes (70) erfolgt.

12. Verfahren nach einem der Ansprüche 9 bis 11, **dadurch gekennzeichnet, dass** mittels eines Steuergerätes eine Regelung zumindest der Förderpumpe (20) und des Heizelementes (70, 71) in einem geschlossenen Regelkreis in Abhängigkeit von ermittelten Messwerten erfolgt, insbesondere in Abhängigkeit der Abgastemperatur und/oder des Abgasmassenstromes und/oder der NOₓ-Konzentration in dem Abgas stromab der Reduktionsmitteleinspritzung.

13. Verfahren nach einem der Ansprüche 9 bis 12, **dadurch gekennzeichnet, dass** stromab der Düse in dem Abgasstrom des Verbrennungsmotors zumindest ein NOₓ-Sensor angeordnet ist und eine Überwachung der NOₓ-Konzentration erfolgt, insbesondere, dass eine Regelung des Heizelementes (70) in Abhängigkeit der gemessenen NOₓ-Konzentration erfolgt.
